# EUROPEAN PATENT APPLICATION

(11) **EP 4 832 308 A1**
(43) Date of publication of application: **28.10.2026**
(21) Application number: 24907068.1
(22) Date of filing: 22.11.2024
(51) Int. Cl.: H02J 50/12, H02J 7/00, H02J 50/70

(54) **POWER-TRANSMITTING CIRCUIT, POWER-TRANSMITTING DEVICE, POWER-RECEIVING DEVICE, AND CONTACTLESS POWER SUPPLY SYSTEM**

(30) Priority: 21.12.2023 JP 2023215344
(71) Applicant: DENSO CORPORATION, Kariya-city, Aichi 448-8661 (JP)
(72) Inventor: NAKAYASHIKI, Yusei, Kariya-city, Aichi 448-8661 (JP)
(74) Representative: TBK
(86) International application number: PCT/JP2024/041446
(87) International publication number: WO 2025/134680

(57) **Abstract**

A power transmission circuit (120 to 1200) for wirelessly transferring power to a power reception device (200) is provided. The power transmission circuit includes a first resonance circuit (10) and a second resonance circuit (12). The first resonance circuit includes a first coil (Ls1) connected to a power supply device (110) configured to supply AC power having a predefined operating frequency, and a first variable impedance element (20) connected in series with the first coil at a connection point between the first coil and the power supply device. The first variable impedance element is configured to switch a state of the first resonance circuit between a resonance state and a non-resonance state. The second resonance circuit (12) includes a second coil (Ls2) provided to be magnetically coupled to the first coil, and a second variable impedance element (22) connected in parallel with the second coil. The second variable impedance element is configured to switch a state of the second resonance circuit between a resonance state and a non-resonance state. One of both end portions of the second coil is connected to the power supply device.

## Description

### [Cross Reference to Related Application]

This application is based on and claims the benefit of priority from Japanese Patent Application No. 2023-215344 filed December 21, 2023, the contents of each of which are incorporated herein by reference.

### [Technical Field]

The present disclosure relates to a power transmission circuit, a power transmission device, a power reception device, and a wireless power transfer system.

### [Background Art]

A wireless power transfer system is known that wirelessly supplies electric power from a power transmission device to an electric vehicle equipped with a power reception device. The wireless power transfer system described in PTL 1 improves power transfer efficiency by providing a tertiary side coil that is magnetically coupled to each of a primary side coil included in the power transmission device and a secondary side coil included in the power reception device.

### [Citation List]

### [Patent Literature]

[PTL 1] JP 2022-130305 A

### [Summary of the Invention]

However, when the primary side coil and the tertiary side coil are disposed close to each other so that the tertiary side coil is magnetically coupled to each of the primary side coil and the secondary side coil, stray capacitance may be generated between the primary and tertiary side coils. This may cause leakage current in the tertiary side coil, which may increase a leakage electromagnetic field generated by the tertiary side coil.

The present disclosure may be implemented in the following aspect.

One aspect of the present disclosure provides a power transmission circuit for wirelessly transferring power to a power reception device. The power transmission circuit includes a first resonance circuit and a second resonance circuit. The first resonance circuit includes: a first coil connected to a power supply device configured to supply AC power having a predefined operating frequency; and a first variable impedance element connected in series with the first coil between the first coil and the power supply device, where the first variable impedance element is configured to switch a state of the first resonance circuit between a resonance state and a non-resonance state. The second resonance circuit includes: a second coil provided to be magnetically coupled to the first coil; and a second variable impedance element connected in parallel with the second coil, where the second variable impedance element is configured to switch a state of the second resonance circuit between a resonance state and a non-resonance state. One of both end portions of the second coil is connected to the power supply device.

According to the power transmission circuit of this aspect, one of opposite end portions of the second coil is connected to the power supply device. This makes it possible to achieve either shortening a current path of leakage current flowing through the second coil by causing leakage current that flows to the second coil through capacitance generated between the first coil and the second coil to flow to a power supply line, or making potentials of the first coil and the second coil equal to each other. Accordingly, leakage current flowing through the second coil can be suppressed. This can suppress an increase in a leakage electromagnetic field caused by the leakage current.

### [Brief Description of the Drawings]

The above-described and other objects, features, and advantages of the present disclosure will become clearer from the following detailed description with reference to the accompanying drawings. The drawings are as follows:
FIG. 1 is an explanatory diagram illustrating a schematic configuration of a wireless power transfer system according to a first embodiment;
FIG. 2 is an explanatory diagram illustrating a schematic configuration of a power supply device according to the first embodiment;
FIG. 3 is an explanatory diagram illustrating a circuit configuration of the wireless power transfer system according to the first embodiment;
FIG. 4 is a circuit diagram illustrating a coil configuration of a power transmission device according to the first embodiment;
FIG. 5 is a circuit diagram schematically illustrating the coil configuration of the power transmission device according to the first embodiment;
FIG. 6 is a circuit diagram illustrating a coil configuration of a power transmission device according to a second embodiment;
FIG. 7 is a circuit diagram schematically illustrating the coil configuration of the power transmission device according to the second embodiment;
FIG. 8 is a circuit diagram illustrating a coil configuration of a power transmission device according to another embodiment;
FIG. 9 is a circuit diagram illustrating a coil configuration of a power transmission device according to another embodiment;
FIG. 10 is a circuit diagram illustrating a coil configuration of a power transmission device according to another embodiment;
FIG. 11 is a circuit diagram illustrating a coil configuration of a power transmission device according to another embodiment;
FIG. 12 is a circuit diagram schematically illustrating a coil configuration of a power transmission device according to another embodiment;
FIG. 13 is a circuit diagram schematically illustrating a coil configuration of a power transmission device according to another embodiment;
FIG. 14 is a circuit diagram illustrating a coil configuration of a power transmission device according to another embodiment;
FIG. 15 is a circuit diagram illustrating a coil configuration of a power transmission device according to another embodiment;
FIG. 16 is a circuit diagram illustrating a coil configuration of a power transmission device according to another embodiment;
FIG. 17 is a circuit diagram illustrating a coil configuration of a power transmission device according to another embodiment;
FIG. 18 is a circuit diagram schematically illustrating a coil configuration of a power transmission device according to another embodiment;
FIG. 19 is a circuit diagram illustrating a coil configuration of a power transmission device according to another embodiment;
FIG. 20 is a circuit diagram illustrating a coil configuration of a power transmission device according to another embodiment;
FIG. 21 is a circuit diagram illustrating a coil configuration of a power transmission device according to another embodiment;
FIG. 22 is a circuit diagram illustrating a coil configuration of a power transmission device according to another embodiment;
FIG. 23 is a circuit diagram schematically illustrating a coil configuration of a power transmission device according to another embodiment;
FIG. 24 is a circuit diagram illustrating a coil configuration of a power transmission device according to another embodiment; and
FIG. 25 is a circuit diagram illustrating a coil configuration of a power transmission device according to another embodiment.

### [Description of the Embodiments]

### A. First Embodiment:

### A-1. Device Configuration:

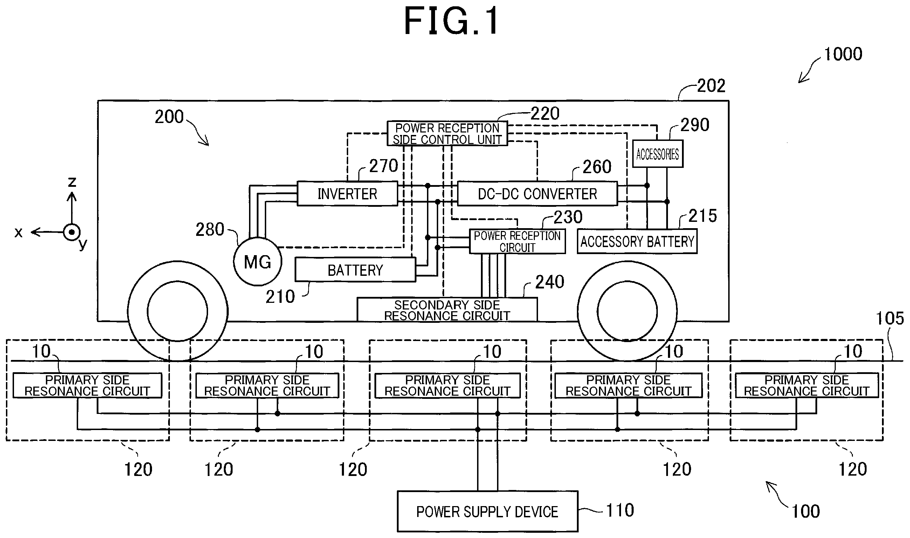

The wireless power transfer system 1000 of the present embodiment illustrated in FIG. 1 includes a power transmission device 100 and a power reception device 200. In the present embodiment, the power transmission device 100 is buried under a travel path 105. The power reception device 200 is mounted to an electric vehicle 202 serving as a mobile object that travels on the travel path 105. In the present embodiment, the electric vehicle 202 is configured as an automatic guided vehicle (AGV) that travels in a factory or a warehouse. The electric vehicle 202 may be configured as an electric automobile or a hybrid automobile.

In the wireless power transfer system 1000, the power transmission device 100 transfers power to the power reception device 200 when the electric vehicle 202 travels on the travel path 105. "Traveling on the travel path 105" includes not only a case in which the electric vehicle 202 is moving, but also a case in which the electric vehicle 202 is stopped near stationary equipment, such as a transport robot, a conveyor, or the like, for transfer of an object to be transported. In FIG. 1, the x-axis direction indicates a travel direction of the electric vehicle 202, the y-axis direction indicates a width direction of the electric vehicle 202, and the z-axis direction indicates a vertically upward direction.

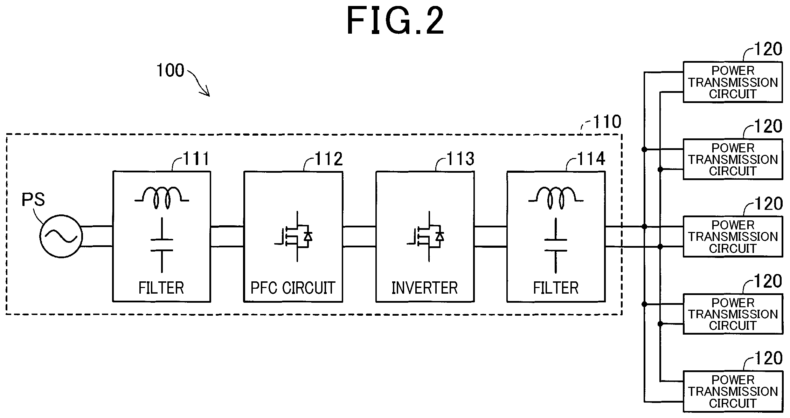

The power transmission device 100 includes a power supply device 110 and a plurality of power transmission circuits 120. The power supply device 110 outputs AC power having a predefined operating frequency. As illustrated in FIG. 2, the power supply device 110 includes a grid power source PS, a noise filter 111, a PFC circuit 112, an inverter 113, and a high-frequency filter 114, where PFC is an abbreviation for Power Factor Correction. In the present embodiment, one set of the noise filter 111, the PFC circuit 112, the inverter 113, and the high-frequency filter 114 is connected to the grid power source PS. However, two or more sets may be connected in parallel with each other to the grid power source PS.

The noise filter 111 removes noise from AC power supplied from the grid power source PS. The PFC circuit 112 is a well-known circuit that eliminates a phase difference between an input voltage and an output current caused by noise removal in the noise filter 111, suppresses harmonics, and improves the power factor toward one. The noise filter 111 and the PFC circuit 112 convert AC power supplied from the grid power source PS into DC power and smooth the DC power. The inverter 113 converts the supplied DC power into high-frequency AC power. The high-frequency filter 114 extracts, from the supplied high-frequency AC power, AC power having a predefined operating frequency and allows the extracted AC power to pass therethrough. The AC power that has passed through the high-frequency filter 114 is supplied to each power transmission circuit 120.

As illustrated in FIG. 1, the plurality of power transmission circuits 120 are installed in the ground below the travel path 105 along the x-axis direction. Some of the plurality of power transmission circuits 120 may be installed at a location other than in the ground below the travel path 105, for example, to a side surface of stationary equipment such as an articulated transport robot or a conveyor. Each power transmission circuit 120 is connected in parallel with the other power transmission circuits 120 to the power supply device 110, and is supplied with AC power from the power supply device 110. Each power transmission circuit 120 includes a primary side resonance circuit 10. The primary side resonance circuit 10 is supplied with AC power from the power supply device 110, and wirelessly transmits AC power to a secondary side resonance circuit 240 described later. A specific configuration of the power transmission circuit 120 including the primary side resonance circuit 10 will be described later.

The power reception device 200 includes a battery 210, an accessory battery 215, a reception side control unit 220, a power reception circuit 230, a secondary side resonance circuit 240, a DC-DC converter circuit 260, an inverter circuit 270, a motor generator 280, and accessories 290. The power reception device 200 need not include the accessories 290. In such a case, the accessory battery 215 and the DC-DC converter circuit 260 may also be omitted. In the present embodiment, the secondary side resonance circuit 240 is provided at a position facing the travel path 105, for example, on a lower surface of the electric vehicle 202. When the power transmission circuit 120 is disposed on a side surface of stationary equipment, the secondary side resonance circuit 240 may be provided on a side surface of the electric vehicle 202. A specific configuration of the power reception device 200 including the secondary side resonance circuit 240 will be described later.

The secondary side resonance circuit 240 is connected to the power reception circuit 230, and AC power received by the secondary side resonance circuit 240 is converted into DC power by the power reception circuit 230. The battery 210, a high-voltage side of the DC-DC converter circuit 260, and the inverter circuit 270 are connected to the output of the power reception circuit 230. The accessory battery 215 and the accessories 290 are connected to a low-voltage side of the DC-DC converter circuit 260. The motor generator 280 is connected to the inverter circuit 270. DC power output from the power reception circuit 230 may be used for charging the battery 210 and for driving the motor generator 280 via the inverter circuit 270. The DC power output from the power reception circuit 230 may also be used for charging the accessory battery 215 and for driving the accessories 290 by being stepped down using the DC-DC converter circuit 260.

The battery 210 is a secondary battery that outputs relatively high DC power for driving the motor generator 280, for example, a voltage of several tens of volts to several hundred volts. The motor generator 280 operates as a three-phase AC motor, and generates drive force for travel of the electric vehicle 202. The motor generator 280 operates as a generator when the electric vehicle 202 decelerates, and regenerates electric power. When the motor generator 280 operates as a motor, the inverter circuit 270 converts electric power of the battery 210 into three-phase AC and supplies the three-phase AC to the motor generator 280. When the motor generator 280 operates as a generator, the inverter circuit 270 converts three-phase AC regenerated by the motor generator 280 into DC and supplies the DC to the battery 210.

The DC-DC converter circuit 260 converts an output voltage of the battery 210 into a voltage lower than the output voltage of the battery 210, for example, 12 V, and supplies the converted voltage to the accessory battery 215 and the accessories 290. The accessory battery 215 is a secondary battery for driving the accessories 290, and has a relatively low voltage. The accessories 290 include peripheral devices and other various accessories of the electric vehicle 202.

The reception side control unit 220 controls various units in the electric vehicle 202, including the inverter circuit 270.

### A-2. Circuit Configuration:

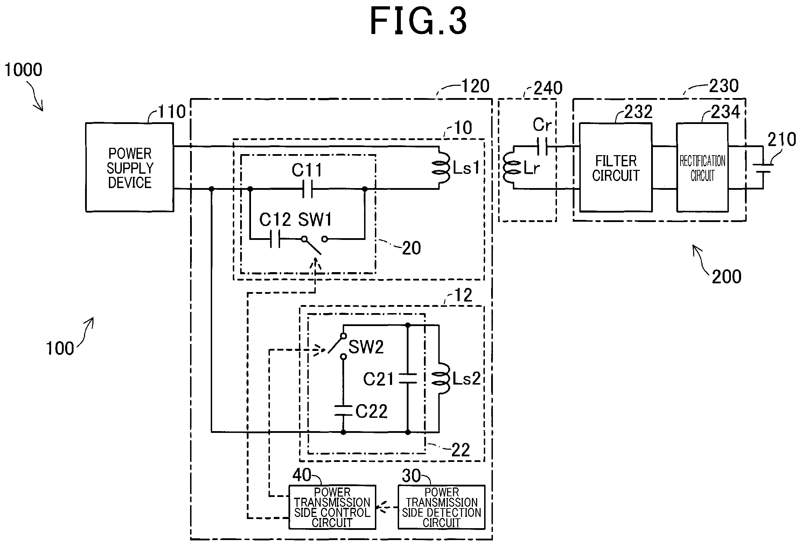

As illustrated in FIG. 3, the power transmission circuit 120 includes, in addition to the primary side resonance circuit 10 described above, a tertiary side resonance circuit 12, a power-transmission-side detection circuit 30, and a power-transmission-side control circuit 40. In FIG. 3, among the plurality of power transmission circuits 120 connected in parallel with the power supply device 110, only one power transmission circuit 120 is illustrated, and illustration of the other power transmission circuits 120 is omitted.

The primary side resonance circuit 10 includes a primary side coil Ls1 and a first variable impedance element 20. The first variable impedance element 20 is connected in series with the primary side coil Ls1 between the power supply device 110 and the primary side coil Ls1, and forms the primary side resonance circuit 10 together with the primary side coil Ls1. The first variable impedance element 20 includes two capacitors C11 and C12 and a first switch SW1. The capacitor C11 and the primary side coil Ls1 are connected in series. The capacitor C12 and the first switch SW1 are connected in series. The capacitor C12 and the first switch SW1 connected in series are connected in parallel with the capacitor C11. The first switch SW1 may be configured to switch a mechanical contact, such as a relay, in response to an external instruction, or may be implemented using a semiconductor element such as a MOSFET or an analog switch.

The capacitance of the first variable impedance element 20 changes by switching the first switch SW1 between ON and OFF. When the first switch SW1 is ON, the capacitor C12 is connected to the primary side coil Ls1. At this time, the capacitance of the first variable impedance element 20 is equal to the sum of the capacitance of the capacitor C11 and the capacitance of the capacitor C12. When the first switch SW1 is OFF, the capacitor C12 is disconnected from the primary side coil Ls1. At this time, the capacitance of the first variable impedance element 20 is equal to the capacitance of the capacitor C11. As the capacitance of the first variable impedance element 20 changes in this manner, the impedance of the primary side resonance circuit 10 when the first switch SW1 is ON decreases as compared with when the first switch SW1 is OFF. The resonance state of the primary side resonance circuit 10 also changes in accordance with changes in the impedance of the primary side resonance circuit 10. In the present embodiment, when the first switch SW1 is ON, the primary side resonance circuit 10 enters a resonance state at an operating frequency and enters a power transmission state. When the first switch SW1 is OFF, the primary side resonance circuit 10 enters a non-resonance state at the operating frequency and enters a standby state. In the standby state, the power transmission circuit 120 causes a standby current lower than a current flowing in the power transmission state to flow through the primary side coil Ls1, thereby generating magnetic flux. In the present embodiment, the first switch SW1 is configured as a normally-open switch, and the primary side resonance circuit 10 is maintained in a standby state under normal conditions, more specifically, when the magnitude of magnetic flux is less than a threshold.

The primary side resonance circuit 10 described above corresponds to a "first resonance circuit" in the present disclosure. The primary side coil Ls1 corresponds to a "first coil" in the present disclosure. The capacitor C11 corresponds to a "first capacitor" in the present disclosure. The capacitor C12 corresponds to a "second capacitor" in the present disclosure. The first switch SW1 corresponds to a "switching element" in the present disclosure.

The tertiary side resonance circuit 12 includes a tertiary side coil Ls2 and a second variable impedance element 22 connected in parallel with the tertiary side coil Ls2. The tertiary side coil Ls2 is disposed so as to be magnetically coupled, in the resonance state, to each of the primary side coil Ls1 included in the primary side resonance circuit 10 and a secondary side coil Lr, described later, included in the secondary side resonance circuit 240. A specific positional relationship between the primary side coil Ls1 and the tertiary side coil Ls2 will be described later.

Either one of both end portions of the tertiary side coil Ls2 is connected to the power supply device 110 according to the positional relationship between the primary side coil Ls1 and the tertiary side coil Ls2. A specific manner in which the end portion of the tertiary side coil Ls2 is connected to the power supply device 110 will be described later.

The second variable impedance element 22 includes two capacitors C21 and C22 and a second switch SW2. The capacitor C22 and the second switch SW2 are connected in series with each other. The capacitor C22 and the second switch SW2 connected in series with each other, the capacitor C21, and the tertiary side coil Ls2 are connected in parallel with one another. The second switch SW2 may be configured to switch a mechanical contact, such as a relay, in response to an external instruction, or may be implemented using a semiconductor element such as a MOSFET or an analog switch.

The capacitance of the second variable impedance element 22 changes by switching the second switch SW2 between ON and OFF. The principle by which the capacitance of the second variable impedance element 22 changes due to switching of the second switch SW2 is the same as that of the first variable impedance element 20, and thus detailed description thereof is omitted. In the present embodiment, the second switch SW2 is configured as a normally-open switch, and the tertiary side resonance circuit 12 is maintained in a standby state under normal conditions, more specifically, when the magnitude of magnetic flux is less than a threshold.

The tertiary side resonance circuit 12 described above corresponds to a "second resonance circuit" in the present disclosure. The tertiary side coil Ls2 corresponds to a "second coil" in the present disclosure. The capacitor C21 corresponds to a "first capacitor" in the present disclosure. The capacitor C22 corresponds to a "second capacitor" in the present disclosure. The second switch SW2 corresponds to a "switching element" in the present disclosure.

The power-transmission-side detection circuit 30 includes a magnetic flux sensor that detects a magnitude of magnetic flux interlinked with the primary side coil Ls1 and a current sensor that detects a magnitude of current flowing through the primary side coil. For convenience of illustration, the power-transmission-side detection circuit 30 is located away from the primary side coil Ls1 in FIG. 3, but is actually located near the primary side coil Ls1. In the present embodiment, the magnetic flux sensor detects the magnitude of the magnetic flux by using a change in voltage applied to a detection coil magnetically coupled to the primary side coil Ls1. The current sensor detects the magnitude of the current by using a change in voltage applied to the capacitor C11. The power-transmission-side detection circuit 30 outputs, to the power-transmission-side control circuit 40, a signal indicating the detected magnitude of the magnetic flux and a signal indicating the magnitude of the current.

The power-transmission-side control circuit 40 drives the first switch SW1 and the second switch SW2 according to signals output from the power-transmission-side detection circuit 30, thereby switching the first switch SW1 and the second switch SW2 between ON and OFF. More specifically, the power-transmission-side control circuit 40 turns ON the first switch SW1 and the second switch SW2 when the magnitude of the magnetic flux indicated by the signal output from the power-transmission-side detection circuit 30 is equal to or greater than a predefined threshold. The power-transmission-side control circuit 40 turns OFF the first switch SW1 and the second switch SW2 when the magnitude of the current indicated by the signal output from the power-transmission-side detection circuit 30 is equal to or less than the threshold.

The magnitude of the current and the magnitude of the magnetic flux change according to the degree of magnetic coupling between the power transmission circuit 120 and the power reception device 200. In the non-resonance state, the magnitude of the magnetic flux increases as the power transmission circuit 120 and the power reception device 200 approach each other. In the resonance state, the magnitude of the current decreases as the power transmission circuit 120 and the power reception device 200 approach each other. The thresholds for the magnitude of the magnetic flux and the magnitude of the current are determined and set in advance by performing simulation or the like as values when the power reception device 200 enters a power transmission area. The "power transmission area" means an area predefined for each power transmission circuit 120 as an area in which power transmission to the power reception device 200 is performed. That is, the primary side control circuit 24 controls switching of the first switch SW1 and the second switch SW2 so as to start power transmission when the power reception device 200 enters the power transmission area. Thus, power supply to a power transmission circuit 120 for which the power reception device 200 is not located in the power transmission area can be suppressed, and power consumption in the wireless power transfer system 1000 can be suppressed.

A circuit configuration of the power reception device 200 will now be described. In FIG. 3, regarding the circuit configuration of the power reception device 200, in particular, a circuit configuration related to power transfer to the battery 210 is illustrated, and the other portions are omitted. As illustrated in FIG. 3, the secondary side resonance circuit 240 is formed by connecting the secondary side coil Lr and the secondary side capacitor Cr in series. The secondary side resonance circuit 240 is configured to enter a resonance state at the operating frequency of the power transmission device 100. In the resonance state, the secondary side resonance circuit 240 receives AC power transmitted from the power transmission device 100, and supplies the received AC power to the power reception circuit 230.

The power reception circuit 230 includes a filter circuit 232 and a rectification circuit 234. The filter circuit 232 suppresses passage of noise components of the AC power input from the secondary side resonance circuit 240, allows AC power in an intended frequency band to pass therethrough, and supplies a current having a constant magnitude to the rectification circuit 234. The rectification circuit 234 is configured as a diode bridge. The rectification circuit 234 rectifies the AC power supplied from the secondary side resonance circuit 240, and supplies the rectified DC power to the battery 210. The battery 210 is charged by being supplied with DC power from the rectification circuit 234.

### A-3. Coil Configuration:

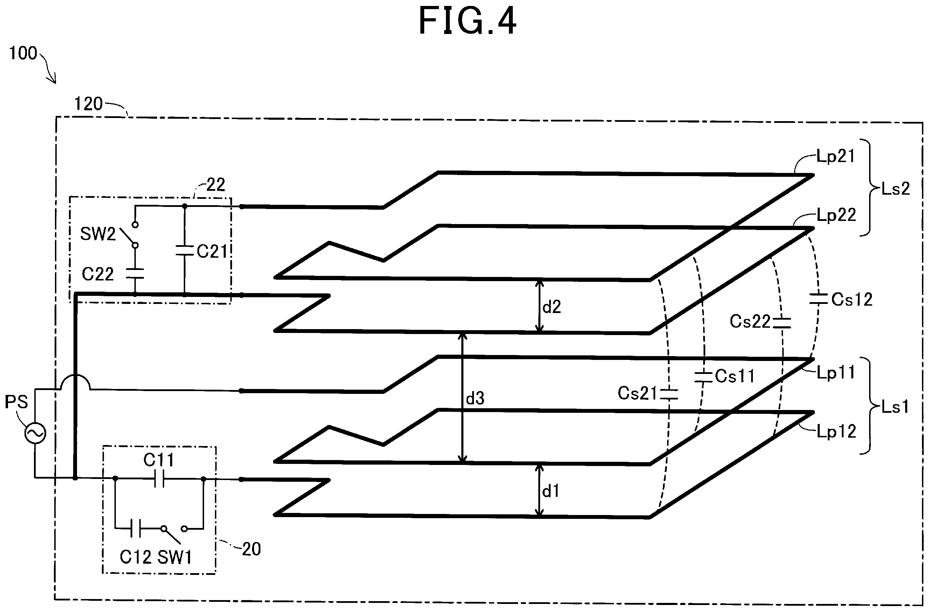

With reference to FIG. 4, a positional relationship between the primary side coil Ls1 and the tertiary side coil Ls2 in the present embodiment, and a manner in which an end portion of the tertiary side coil Ls2 is connected to the power supply device 110 according to the positional relationship, will now be described. In FIG. 4, among the components of the power supply device 110, the grid power source PS is illustrated, and illustration of the other components is omitted. Illustration of the power-transmission-side detection circuit 30 and the power-transmission-side control circuit 40 is omitted.

As illustrated in FIG. 4, the primary side coil Ls1 is formed such that a planar coil Lp11 and a planar coil Lp12 overlap each other in a stacking direction. The planar coil Lp11 and the planar coil Lp12 are spaced apart from each other by a predefined distance d1 in the stacking direction. In the present embodiment, the planar coil Lp11 is positioned above the planar coil Lp12 in the stacking direction.

Similarly, the tertiary side coil Ls2 is formed such that a planar coil Lp21 and a planar coil Lp22 overlap each other in the stacking direction. The planar coil Lp21 and the planar coil Lp22 are spaced apart from each other by a predefined distance d2 in the stacking direction. In the present embodiment, the planar coil Lp21 is positioned above the planar coil Lp22 in the stacking direction.

In the present embodiment, the distance d1 and the distance d2 are substantially equal to each other. The primary side coil Ls1 and the tertiary side coil Ls2 may be formed such that one of the distance d1 and the distance d2 is greater than the other.

The primary side coil Ls1 and the tertiary side coil Ls2 are formed so as to overlap each other with a predefined distance d3 therebetween along the stacking direction. The tertiary side coil Ls2 is positioned above the primary side coil Ls1 in the stacking direction. Here, in FIG. 4, the "distance d3" means a distance along the stacking direction between the planar coil Lp22 and the planar coil Lp11. That is, the distance d3 refers to a distance between the primary side coil Ls1 and the planar coil Lp22. The planar coil Lp22 is a nearest coil, among the two planar coils Lp21 and Lp22 forming the tertiary side coil Ls2, to the primary side coil Ls1 in the stacking direction. More specifically, the distance d3 refers to a distance between the planar coil Lp11 and the planar coil Lp22. The planar coil Lp11 is closest to the tertiary side coil Ls2 in the stacking direction among the planar coils of the primary side coil Ls1.

In the present embodiment, the primary side coil Ls1 and the tertiary side coil Ls2 are disposed such that the distance d3 is greater than each of the distances d1 and d2. Accordingly, as compared with configurations in which the distance d3 is substantially the same as each of the distances d1 and d2 and configurations in which the distance d3 is less than each of the distances d1 and d2, a distance between the primary side coil Ls1 and the tertiary side coil Ls2 in the stacking direction can be increased. As described later, this can suppress an increase in the magnitude of stray capacitance between the primary side coil Ls1 and the tertiary side coil Ls2. When the distances d1 and d2 are different from each other, the primary side coil Ls1 and the tertiary side coil Ls2 are preferably disposed such that the distance d3 is greater than the smaller one of the distances d1 and d2. In the present embodiment, the primary side coil Ls1 and the tertiary side coil Ls2 are formed of conductive patterns provided on a printed circuit board, and the above-described distances d1, d2, and d3 are defined by thicknesses of prepreg layers included in the printed circuit board. The prepreg separating the primary side coil Ls1 and the tertiary side coil Ls2 in this manner corresponds to a "spacing layer" in the present disclosure.

In the primary side coil Ls1 and the tertiary side coil Ls2 having the positional relationship described above, when current flows through the primary side coil Ls1, stray capacitance is generated between the planar coils Lp11 and Lp12 forming the primary side coil Ls1 and the planar coils Lp21 and Lp22 forming the tertiary side coil Ls2. Leakage current is generated in the tertiary side coil Ls2 through the stray capacitance. In the following description, stray capacitance generated between the planar coil Lp11 and the planar coil Lp21 is referred to as "stray capacitance Cs11," stray capacitance generated between the planar coil Lp11 and the planar coil Lp22 is referred to as "stray capacitance Cs12," stray capacitance generated between the planar coil Lp12 and the planar coil Lp21 is referred to as "stray capacitance Cs21," and stray capacitance generated between the planar coil Lp12 and the planar coil Lp22 is referred to as "stray capacitance Cs22." In the present embodiment, among the planar coils that generate the stray capacitances described above, the distance between the planar coil Lp11 and the planar coil Lp22, which is the nearest coil, is the smallest. Therefore, among the stray capacitances described above, the stray capacitance Cs12 generated between the planar coil Lp11 and the planar coil Lp22 has the largest capacitance. That is, in the present embodiment, the magnitude of leakage current through the stray capacitance Cs12 is greater than the magnitude of leakage current through the other stray capacitances.

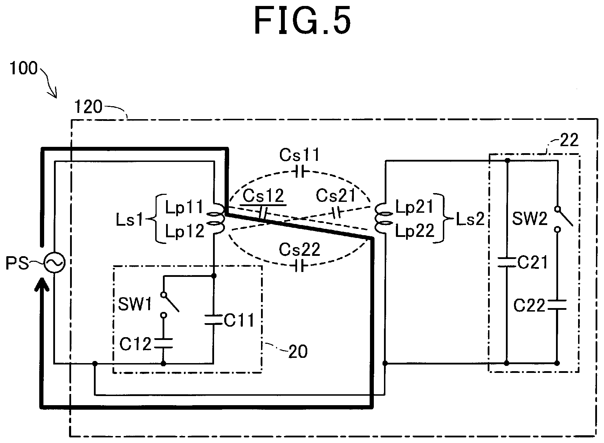

As illustrated in FIG. 4, in the present embodiment, an end portion of the planar coil Lp22, which is the nearest coil, is connected to the grid power source PS at a connection point between the first variable impedance element 20 and the grid power source PS. Effects achieved by this connection configuration will be described with reference to FIG. 5, which schematically illustrates the connection configuration illustrated in FIG. 4. Connecting the end portion of the planar coil Lp22 to the grid power source PS forms, as illustrated in FIG. 5, a current path of leakage current bypassing a portion of the tertiary side coil Ls2. The current path extends through the grid power source PS, the planar coil Lp11, the stray capacitance Cs12, the planar coil Lp22, and the grid power source PS. Thus, according to the connection configuration of the present embodiment, the maximum leakage current through the stray capacitance Cs12 having the largest capacitance is prevented from passing through the planar coil Lp21. Therefore, the current path of leakage current flowing through the tertiary side coil Ls2 can be shortened, which can suppress an increase in a leakage electromagnetic field caused by the leakage current.

According to the wireless power transfer system 1000 of the first embodiment described above, the end portion of the planar coil Lp22, which is the nearest coil, is connected to the power supply device 110 at a connection point between the power supply device 110 and the first variable impedance element 20. Accordingly, a current path of leakage current bypassing a portion of the tertiary side coil Ls2 extends through the grid power source PS, the planar coil Lp11, the stray capacitance Cs12, the planar coil Lp22, and the grid power source PS. Thus, the maximum leakage current through the stray capacitance Cs12 having the largest capacitance is prevented from passing through the planar coil Lp21. Therefore, the current path of leakage current flowing through the tertiary side coil Ls2 can be shortened, which can suppress an increase in a leakage electromagnetic field caused by the leakage current.

Since the distance d3 is greater than each of the distances d1 and d2, as compared with configurations in which the distance d3 is substantially the same as each of the distances d1 and d2 and configurations in which the distance d3 is less than each of the distances d1 and d2, a distance between the primary side coil Ls1 and the tertiary side coil Ls2 in the stacking direction can be increased. This can suppress an increase in the magnitude of stray capacitance generated between the primary side coil Ls1 and the tertiary side coil Ls2.

The power transmission circuit 120 includes the first variable impedance element 20 and the second variable impedance element 22. The first variable impedance element 20 and the second variable impedance element 22 switch respective states of the primary side resonance circuit 10 and the tertiary side resonance circuit 12 between a resonance state and a non-resonance state according to a positional relationship between the power transmission circuit 120 and the power reception device 200. Therefore, when the positional relationship between the power transmission circuit 120 and the power reception device 200 is such that power transmission is not to be performed, the states of the primary side resonance circuit 10 and the tertiary side resonance circuit 12 are switched to the non-resonance state, thereby suppressing power supply to the power transmission circuit 120. This can suppress an increase in power consumption in the wireless power transfer system 1000.

Since the primary side coil Ls1 and the tertiary side coil Ls2 are separated by the spacing layer, the primary side coil Ls1 and the tertiary side coil Ls2 can be spaced apart from each other as compared with a configuration that does not include the spacing layer. This can suppress an increase in the magnitude of the stray capacitance Cs11 generated between the primary side coil Ls1 and the tertiary side coil Ls2.

### B. Second Embodiment:

The power transmission circuit 120A included in the power transmission device 100A of the second embodiment differs from the power transmission circuit 120 of the first embodiment in that an end portion of the nearest coil is connected to the grid power source PS at a connection point between the grid power source PS and the primary side coil Ls1. The circuit configuration of the power transmission circuit 120A of the second embodiment is the same as that of the power transmission circuit 120 of the first embodiment. Therefore, identical components are denoted by identical reference signs, and detailed description thereof is omitted.

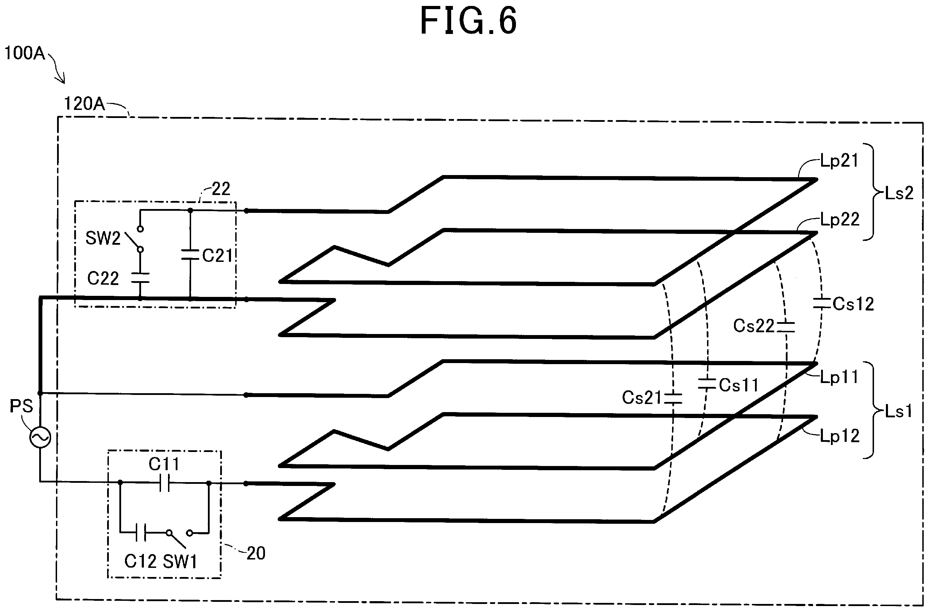

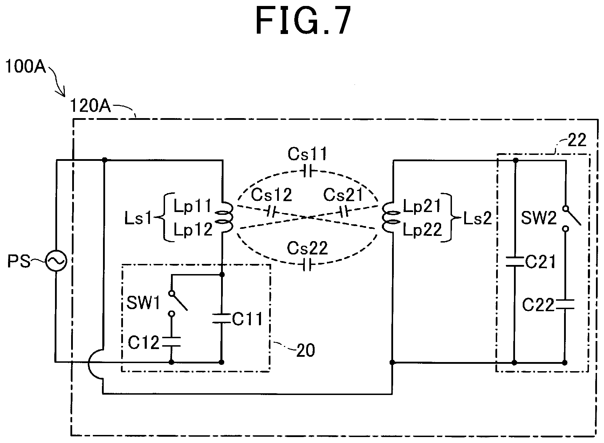

In the power transmission circuit 120A illustrated in FIG. 6, an end portion of the planar coil Lp22, which is the nearest coil, is connected to the grid power source PS at a connection point between the grid power source PS and the primary side coil Ls1. Effects achieved by this connection configuration will be described with reference to FIG. 7, which schematically illustrates the connection configuration illustrated in FIG. 6. Connecting the end portion of the planar coil Lp22 to the grid power source PS as illustrated in FIG. 7 can make the potentials of the planar coil Lp11 and the planar coil Lp22, between which the stray capacitance Cs12 having the largest capacitance is generated, equal to each other. This can suppress flow of a maximum leakage current through the stray capacitance Cs12 in the tertiary side coil Ls2 and can suppress an increase in a leakage electromagnetic field caused by the leakage current.

According to the wireless power transfer system 1000 including the power transmission device 100A of the second embodiment described above, an end portion of the planar coil Lp22, which is the nearest coil, is connected to the grid power source PS at a connection point between the grid power source PS and the primary side coil Ls1. Thus, the potentials of the planar coil Lp11 and the planar coil Lp22, between which the stray capacitance Cs12 having the largest capacitance is generated, can be made equal to each other. Accordingly, in the tertiary side coil Ls2, flow of a maximum leakage current through the stray capacitance Cs12 can be suppressed. This can suppress an increase in a leakage electromagnetic field caused by the leakage current.

### C. Other Embodiments:

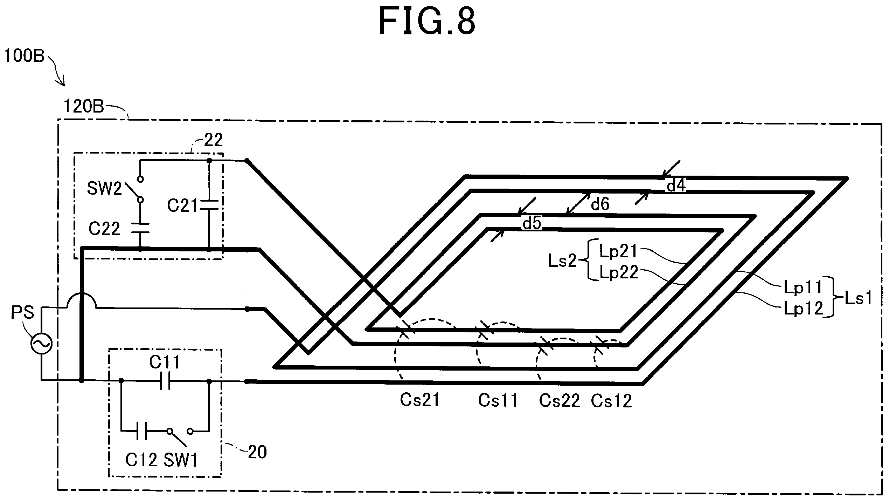

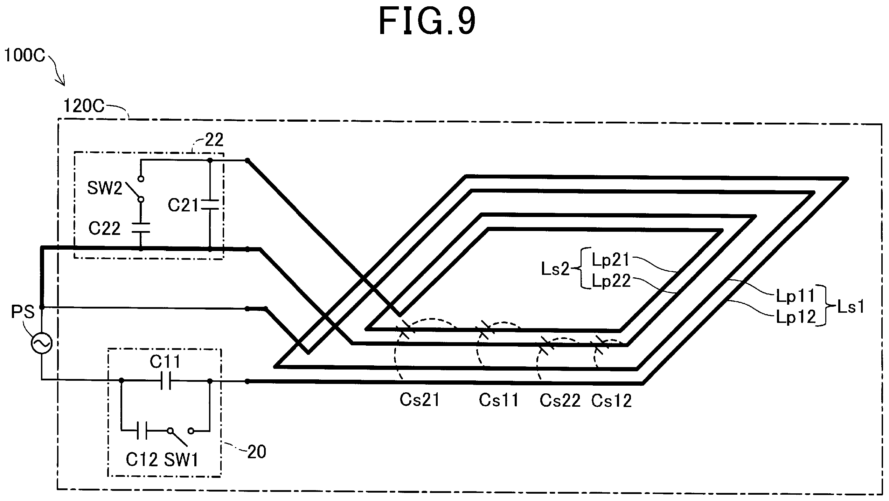

(C1) In each of the above embodiments, the primary side coil Ls1 and the tertiary side coil Ls2 are formed so as to overlap each other in the stacking direction, as illustrated in FIGS. 4 and 6. However, the present disclosure is not limited to this configuration. As illustrated in FIGS. 8 and 9, the tertiary side coil Ls2 may be disposed in the same layer as the primary side coil Ls1 and in an empty region radially inward of the primary side coil Ls1.

FIGS. 8 and 9 illustrate the same configuration, except for the manner in which the end portion of the tertiary side coil Ls2 is connected to the grid power source PS. Therefore, the arrangement of the primary side coil Ls1 and the tertiary side coil Ls2 will be described more specifically with reference to FIG. 8. In FIG. 8, the primary side coil Ls1 is formed by winding the planar coil Lp11 and the planar coil Lp12 in the same layer. The planar coil Lp11 and the planar coil Lp12 are formed such that conductors forming the respective planar coils overlap each other in the radial direction with a predefined distance d4 therebetween. In the present embodiment, the planar coil Lp11 is located radially inward of the planar coil Lp12.

Similarly, the tertiary side coil Ls2 is formed by winding the planar coil Lp21 and the planar coil Lp22 in the same layer. The planar coil Lp21 and the planar coil Lp22 are formed such that conductors forming the respective planar coils overlap each other in the radial direction with a predefined distance d5 therebetween. In the present embodiment, the planar coil Lp21 is located radially inward of the planar coil Lp22. In the present embodiment, the distances d4 and d5 are substantially the same. The primary side coil Ls1 and the tertiary side coil Ls2 may be formed such that one of the distances d4 and d5 is greater than the other.

The primary side coil Ls1 and the tertiary side coil Ls2 are formed so as to overlap each other in the radial direction with a predefined distance d6 therebetween. Here, in FIG. 8, the "distance d6" refers to a distance in the radial direction between a conductor forming the planar coil Lp22 and a conductor forming the planar coil Lp11. That is, the distance d6 refers to a distance in the radial direction between a conductor forming the primary side coil Ls1 and a conductor forming the planar coil Lp22, which is closest to the primary side coil Ls1 in the radial direction among the two planar coils Lp21 and Lp22 forming the tertiary side coil Ls2. More specifically, the distance d6 refers to a distance in the radial direction between a conductor forming the planar coil Lp11 and a conductor forming the planar coil Lp22. The conductor forming the planar coil Lp11 is closest to a conductor forming the tertiary side coil Ls2 among the conductors forming the primary side coil Ls1. In this positional relationship, the stray capacitance Cs12 formed between the planar coil Lp22, which is the nearest coil, and the planar coil Lp11 has the largest capacitance.

In the present embodiment, the primary side coil Ls1 and the tertiary side coil Ls2 are disposed such that the distance d6 is greater than each of the distances d4 and d5. Accordingly, as compared with configurations in which the distance d6 is substantially the same as each of the distances d4 and d5 and configurations in which the distance d6 is less than each of the distances d4 and d5, a distance between the primary side coil Ls1 and the tertiary side coil Ls2 in the radial direction can be increased. This can suppress an increase in the magnitude of stray capacitance generated between the primary side coil Ls1 and the tertiary side coil Ls2.

In the power transmission circuit 120B illustrated in FIG. 8, an end portion of the planar coil Lp22, which is the nearest coil, is connected to the grid power source PS at a connection point between the first variable impedance element 20 and the grid power source PS. When this connection configuration is schematically illustrated, a circuit configuration similar to that of FIG. 5 described above is provided. Thus, the wireless power transfer system 1000 including the power transmission device 100B having the power transmission circuit 120B illustrated in FIG. 8 also achieves the same effects as those of the first embodiment.

On the other hand, in the power transmission circuit 120C illustrated in FIG. 9, an end portion of the planar coil Lp22, which is the nearest coil, is connected to the grid power source PS at a connection point between the grid power source PS and the primary side coil Ls1. When this connection configuration is schematically illustrated, a circuit configuration similar to that of FIG. 7 described above is provided. Thus, the wireless power transfer system 1000 including the power transmission device 100C having the power transmission circuit 120C illustrated in FIG. 9 also achieves the same effects as those of the second embodiment.

(C2) In the configurations illustrated in FIGS. 4 and 6 described above, in the primary side coil Ls1, the planar coil Lp11 is disposed above the planar coil Lp12 in the stacking direction, and in the tertiary side coil Ls2, the planar coil Lp21 is disposed above the planar coil Lp22 in the stacking direction. In the configurations illustrated in FIGS. 8 and 9 described above, in the primary side coil Ls1, the planar coil Lp11 is disposed radially inward of the planar coil Lp12, and in the tertiary side coil Ls2, the planar coil Lp21 is disposed radially inward of the planar coil Lp22. However, the positional relationship between the planar coil Lp11 and the planar coil Lp12 in the primary side coil Ls1 and the positional relationship between the planar coil Lp21 and the planar coil Lp22 in the tertiary side coil Ls2 are not limited to the positional relationships described above.

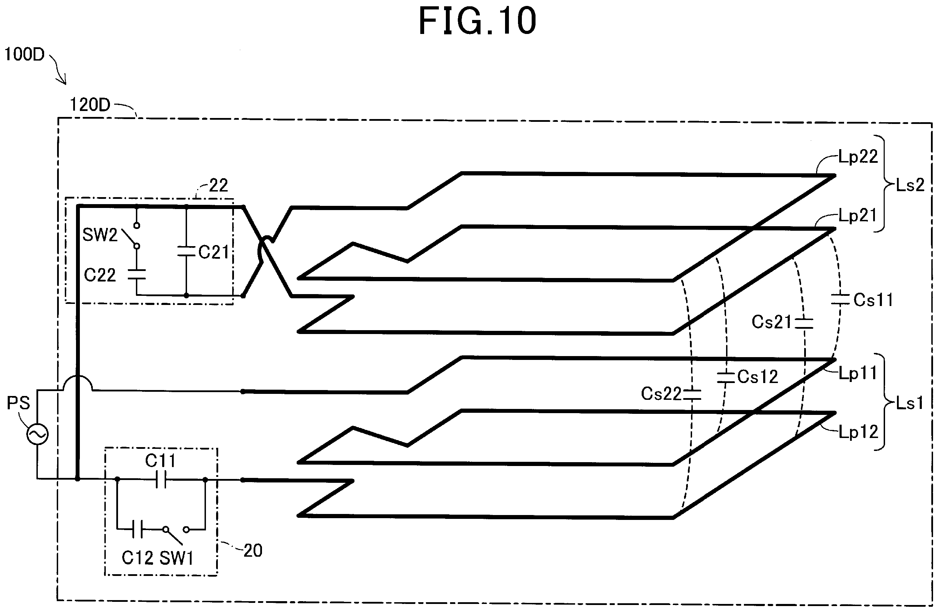

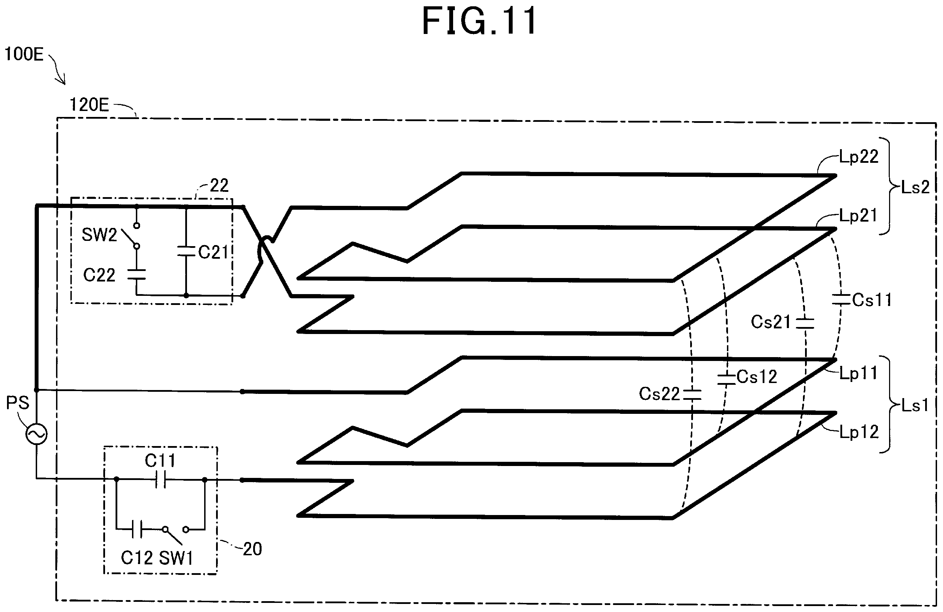

In FIGS. 10 and 11, the planar coil Lp22 is disposed above the planar coil Lp21 in the stacking direction. In such a positional relationship, the planar coil Lp21 corresponds to the nearest coil, and the stray capacitance Cs11 has the largest capacitance.

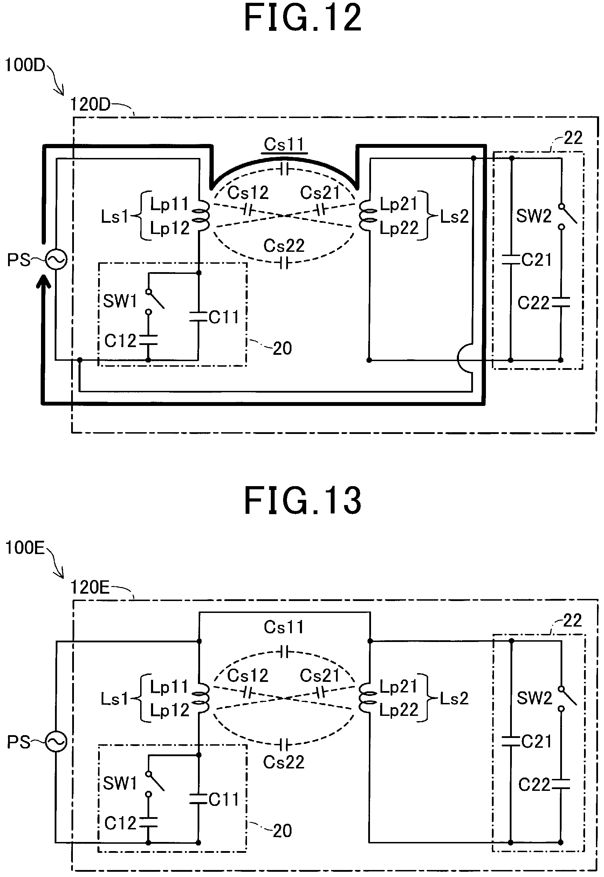

In the power transmission circuit 120D illustrated in FIG. 10, an end portion of the planar coil Lp21, which is the nearest coil, is connected to the grid power source PS at a connection point between the first variable impedance element 20 and the grid power source PS. Effects achieved by this connection configuration will be described with reference to FIG. 12, which schematically illustrates the connection configuration illustrated in FIG. 10. Connecting the end portion of the planar coil Lp21 to the grid power source PS forms, as illustrated in FIG. 12, a current path of leakage current bypassing a portion of the tertiary side coil Ls2. The current path extends through the grid power source PS, the planar coil Lp11, the stray capacitance Cs11, the planar coil Lp21, and the grid power source PS, in this order. Thus, according to the connection configuration of the present embodiment, leakage current is prevented from passing through the planar coil Lp22. Therefore, the current path of leakage current flowing through the tertiary side coil Ls2 can be shortened, which can suppress an increase in a leakage electromagnetic field caused by leakage current through the stray capacitance Cs11. That is, the wireless power transfer system 1000 including the power transmission device 100D having the power transmission circuit 120D illustrated in FIG. 10 also achieves the same effects as those of the first embodiment.

In the power transmission circuit 120E illustrated in FIG. 11, an end portion of the planar coil Lp21, which is the nearest coil, is connected to the grid power source PS at a connection point between the grid power source PS and the primary side coil Ls1. Effects achieved by this connection configuration will be described with reference to FIG. 13, which schematically illustrates the connection configuration illustrated in FIG. 11. Connecting the end portion of the planar coil Lp21 to the grid power source PS as illustrated in FIG. 13 can make the potentials of the planar coil Lp11 and the planar coil Lp21, between which the stray capacitance Cs11 having the largest capacitance is generated, equal to each other. This can suppress flow of leakage current through the stray capacitance Cs11, and an increase in a leakage electromagnetic field caused by the leakage current. Thus, the wireless power transfer system 1000 including the power transmission device 100E having the power transmission circuit 120E illustrated in FIG. 11 also achieves the same effects as those of the second embodiment.

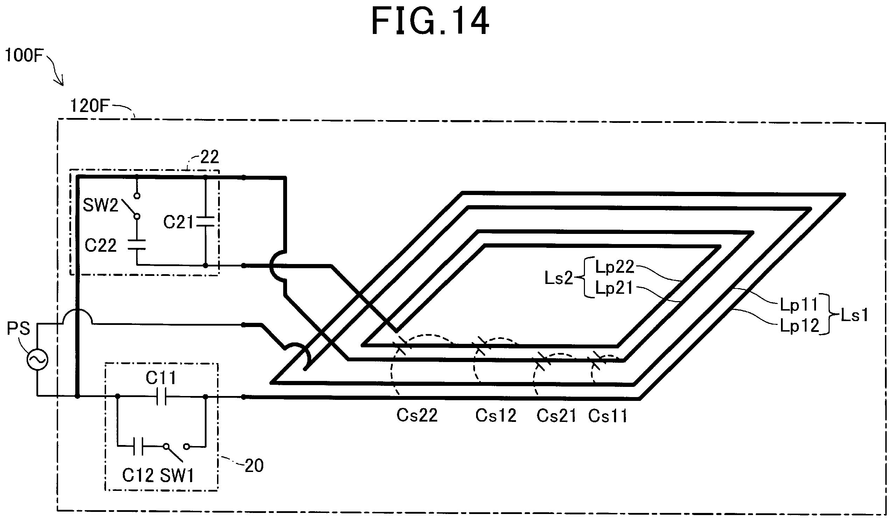

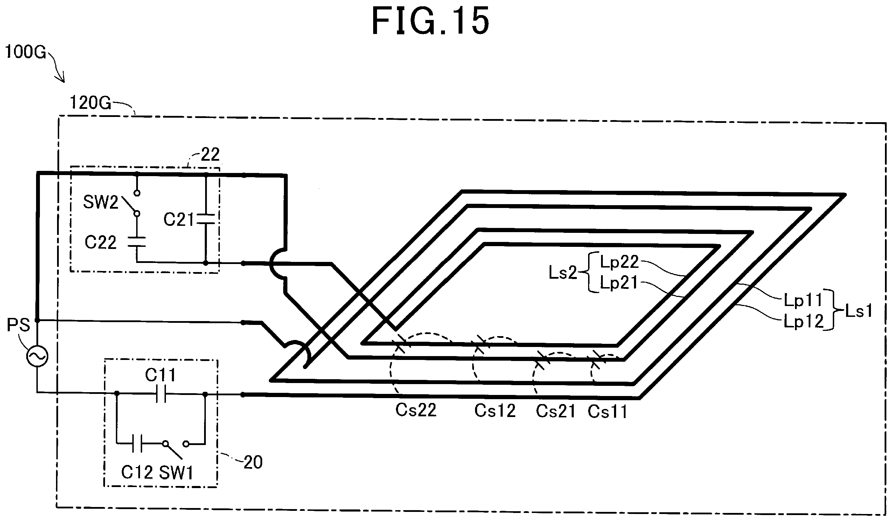

In FIGS. 14 and 15, the planar coil Lp22 is disposed radially inward of the planar coil Lp21. In such a positional relationship, the planar coil Lp21 corresponds to the nearest coil, and the stray capacitance Cs11 has the largest capacitance.

In the power transmission circuit 120F illustrated in FIG. 14, an end portion of the planar coil Lp21, which is the nearest coil, is connected to the grid power source PS at a connection point between the first variable impedance element 20 and the grid power source PS. When this connection configuration is schematically illustrated, a circuit configuration similar to that of FIG. 12 described above is provided. Thus, the wireless power transfer system 1000 including the power transmission device 100F having the power transmission circuit 120F illustrated in FIG. 14 also achieves the same effects as those of the first embodiment.

In the power transmission circuit 120G illustrated in FIG. 15, an end portion of the planar coil Lp21, which is the nearest coil, is connected to the grid power source PS at a connection point between the grid power source PS and the primary side coil Ls1. When this connection configuration is schematically illustrated, a circuit configuration similar to that of FIG. 13 described above is provided. Thus, the wireless power transfer system 1000 including the power transmission device 100G having the power transmission circuit 120G illustrated in FIG. 15 also achieves the same effects as those of the second embodiment.

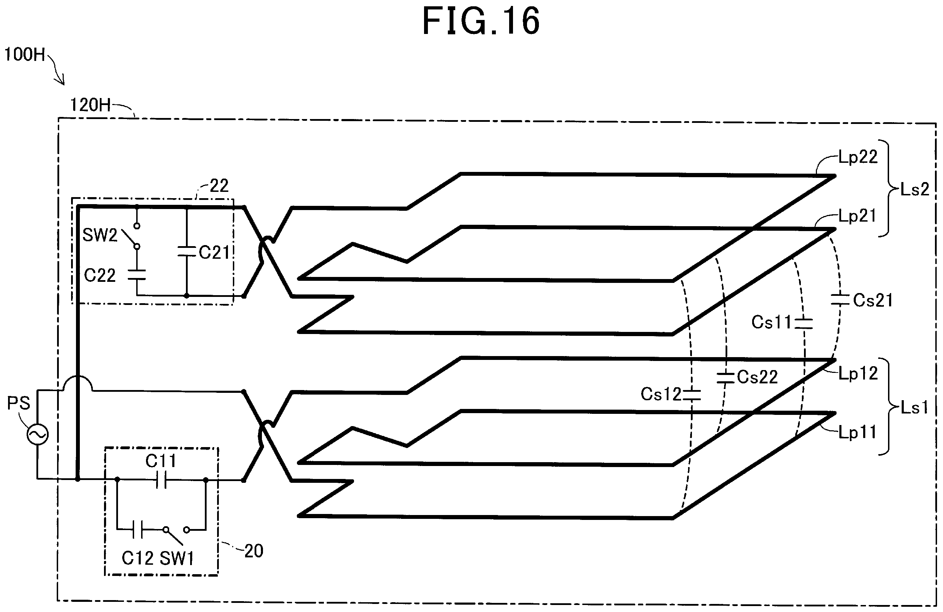

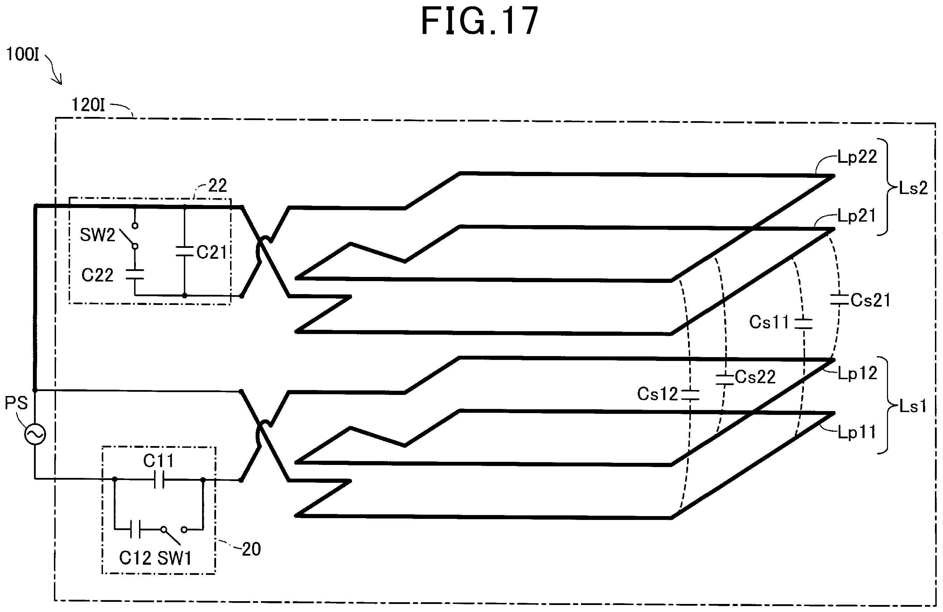

In FIGS. 16 and 17, the planar coil Lp12 is disposed above the planar coil Lp11 in the stacking direction, and the planar coil Lp22 is disposed above the planar coil Lp21 in the stacking direction. In such a positional relationship, the planar coil Lp21 corresponds to the nearest coil, and the stray capacitance Cs21 has the largest capacitance.

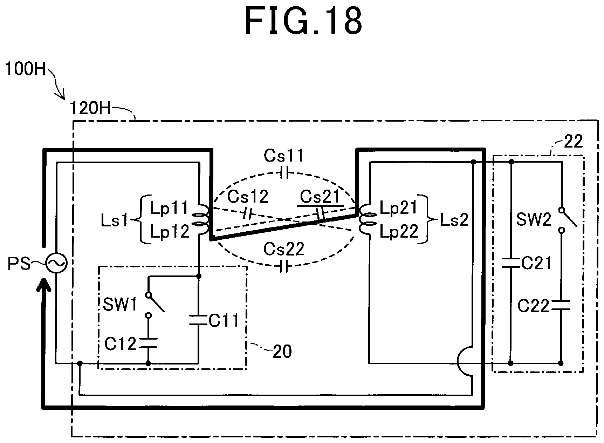

In the power transmission circuit 120H illustrated in FIG. 16, an end portion of the planar coil Lp21, which is the nearest coil, is connected to the grid power source PS at a connection point between the first variable impedance element 20 and the grid power source PS. Effects achieved by this connection configuration will be described with reference to FIG. 18, which schematically illustrates the connection configuration illustrated in FIG. 16. Connecting the end portion of the planar coil Lp21 to the grid power source PS forms, as illustrated in FIG. 18, a current path of leakage current bypassing a portion of the tertiary side coil Ls2. The current path extends through the grid power source PS, the planar coil Lp12, the stray capacitance Cs21, the planar coil Lp21, and the grid power source PS, in this order. Thus, according to the connection configuration of the present embodiment, leakage current is prevented from passing through the planar coil Lp22. Therefore, the current path of leakage current flowing through the tertiary side coil Ls2 can be shortened, which can suppress an increase in a leakage electromagnetic field caused by leakage current through the stray capacitance Cs21. That is, the wireless power transfer system 1000 including the power transmission device 100H having the power transmission circuit 120H illustrated in FIG. 16 also achieves the same effects as those of the first embodiment.

In the power transmission circuit 120I illustrated in FIG. 17, an end portion of the planar coil Lp21, which is the nearest coil, is connected to the grid power source PS at a connection point between the grid power source PS and the primary side coil Ls1. When this connection configuration is schematically illustrated, a circuit configuration similar to that of FIG. 13 described above is provided. Thus, the wireless power transfer system 1000 including the power transmission device 100I having the power transmission circuit 120I illustrated in FIG. 17 also achieves the same effects as those of the second embodiment.

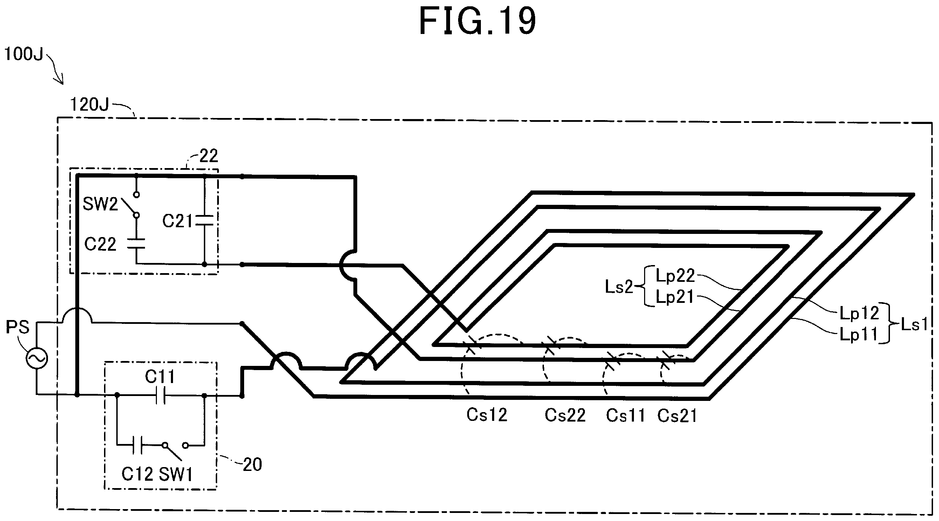

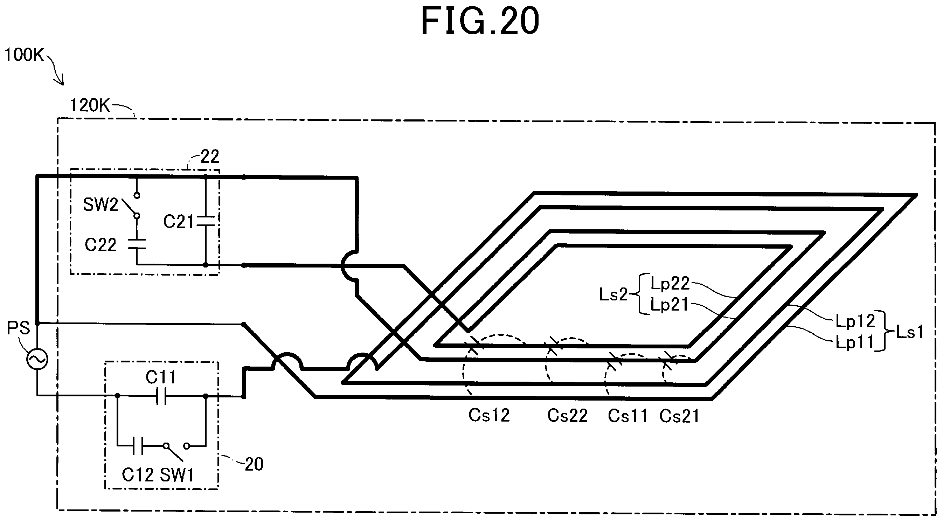

In FIGS. 19 and 20, the planar coil Lp12 is disposed radially inward of the planar coil Lp11, and the planar coil Lp22 is disposed radially inward of the planar coil Lp21. In such a positional relationship, the planar coil Lp21 corresponds to the nearest coil, and the stray capacitance Cs21 has the largest capacitance.

In the power transmission circuit 120J illustrated in FIG. 19, an end portion of the planar coil Lp21, which is the nearest coil, is connected to the grid power source PS at a connection point between the first variable impedance element 20 and the grid power source PS. When this connection configuration is schematically illustrated, a circuit configuration similar to that of FIG. 18 described above is provided. Thus, the wireless power transfer system 1000 including the power transmission device 100J having the power transmission circuit 120J illustrated in FIG. 19 also achieves the same effects as those of the first embodiment.

In the power transmission circuit 120K illustrated in FIG. 20, an end portion of the planar coil Lp21, which is the nearest coil, is connected to the grid power source PS at a connection point between the grid power source PS and the primary side coil Ls1. When this connection configuration is schematically illustrated, a circuit configuration similar to that of FIG. 13 described above is provided. Thus, the wireless power transfer system 1000 including the power transmission device 100K having the power transmission circuit 120K illustrated in FIG. 20 also achieves the same effects as those of the second embodiment.

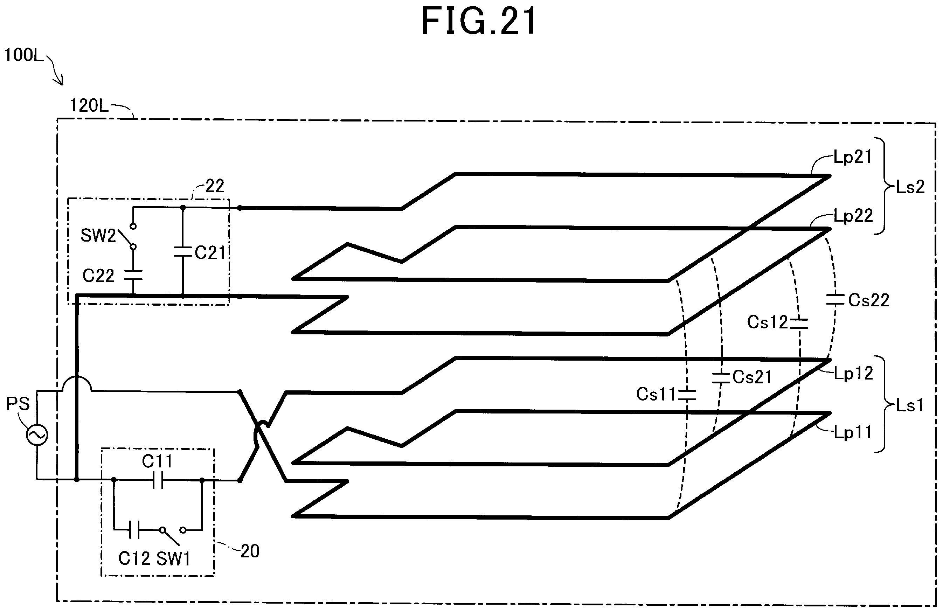

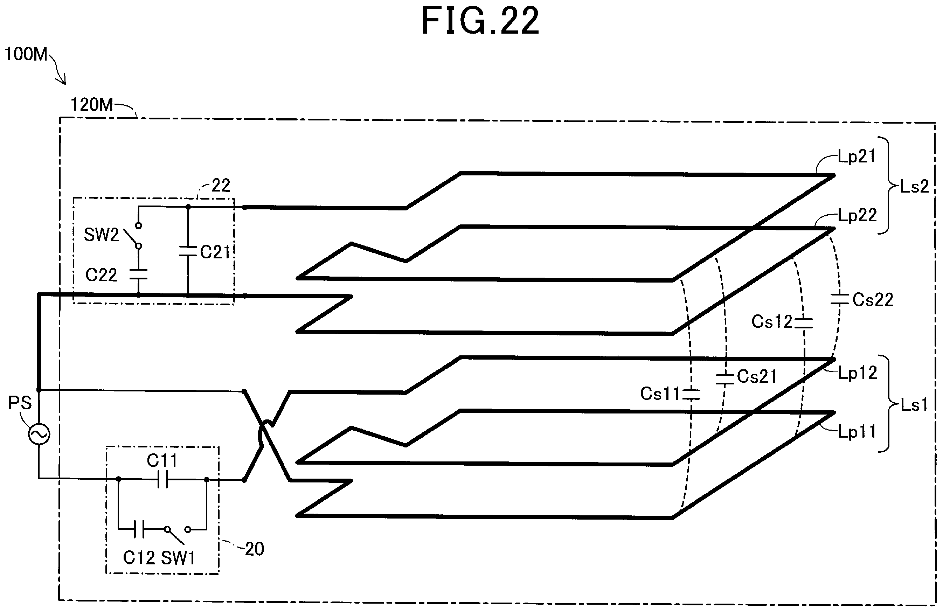

In FIGS. 21 and 22, the planar coil Lp12 is disposed above the planar coil Lp11 in the stacking direction. In such a positional relationship, the planar coil Lp22 corresponds to the nearest coil, and the stray capacitance Cs22 has the largest capacitance.

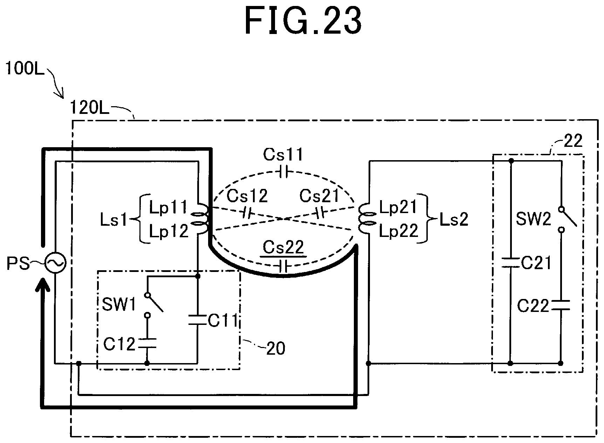

In the power transmission circuit 120L illustrated in FIG. 21, an end portion of the planar coil Lp22, which is the nearest coil, is connected to the grid power source PS at a connection point between the first variable impedance element 20 and the grid power source PS. Effects achieved by this connection configuration will be described with reference to FIG. 23, which schematically illustrates the connection configuration illustrated in FIG. 21. Connecting the end portion of the planar coil Lp22 to the grid power source PS forms, as illustrated in FIG. 23, a current path of leakage current bypassing a portion of the tertiary side coil Ls2. The current path extends through the grid power source PS, the planar coil Lp12, the stray capacitance Cs22, the planar coil Lp22, and the grid power source PS, in this order. Thus, according to the connection configuration of the present embodiment, leakage current through the stray capacitance Cs22 is prevented from passing through the planar coil Lp21. Therefore, the current path of leakage current flowing through the tertiary side coil Ls2 can be shortened, which can suppress an increase in a leakage electromagnetic field caused by leakage current. Thus, the wireless power transfer system 1000 including the power transmission device 100L having the power transmission circuit 120L illustrated in FIG. 21 also achieves the same effects as those of the first embodiment.

In the power transmission circuit 120M illustrated in FIG. 22, an end portion of the planar coil Lp22, which is the nearest coil, is connected to the grid power source PS at a connection point between the grid power source PS and the primary side coil Ls1. When this connection configuration is schematically illustrated, a circuit configuration similar to that of FIG. 7 described above is provided. Thus, the wireless power transfer system 1000 including the power transmission device 100M having the power transmission circuit 120M illustrated in FIG. 22 also achieves the same effects as those of the second embodiment.

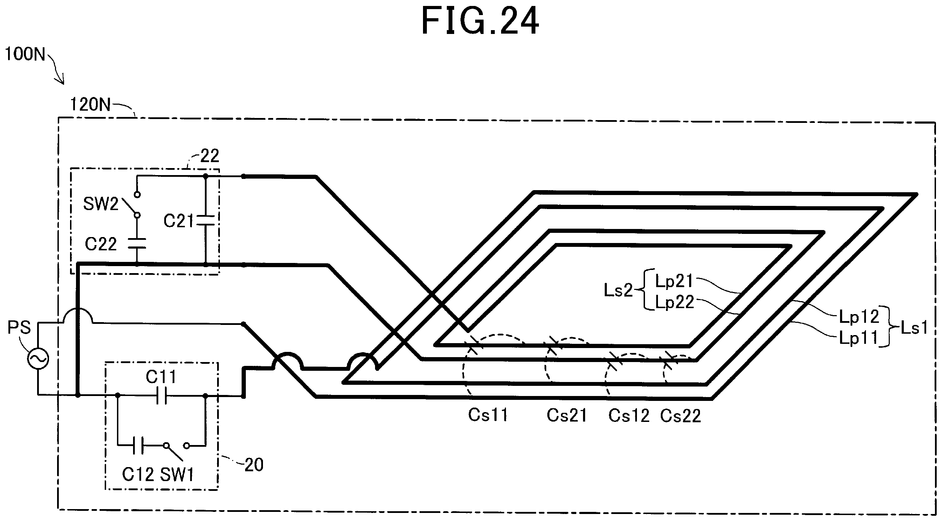

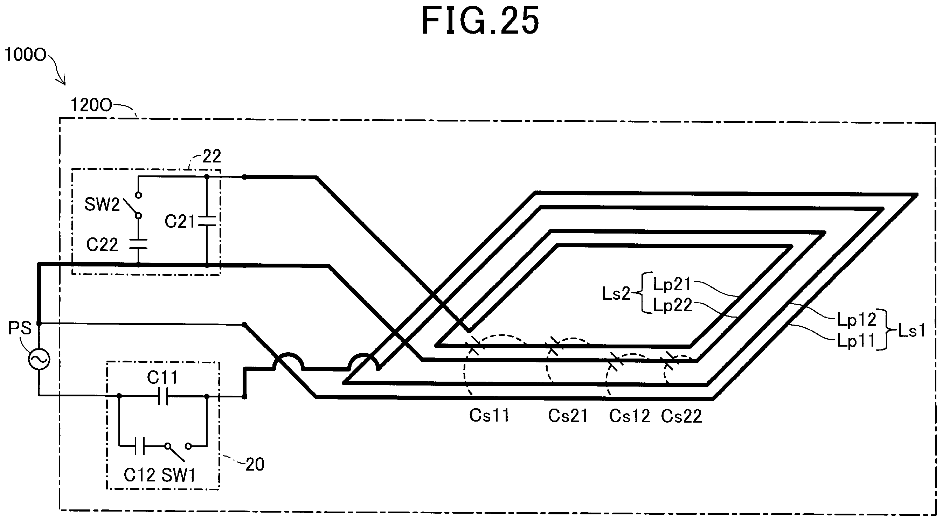

In FIGS. 24 and 25, the planar coil Lp12 is disposed radially inward of the planar coil Lp11. In such a positional relationship, the planar coil Lp22 corresponds to the nearest coil, and the stray capacitance Cs22 has the largest capacitance.

In the power transmission circuit 120N illustrated in FIG. 24, an end portion of the planar coil Lp22, which is the nearest coil, is connected to the grid power source PS at a connection point between the first variable impedance element 20 and the grid power source PS. When this connection configuration is schematically illustrated, a circuit configuration similar to that of FIG. 23 described above is provided. Thus, the wireless power transfer system 1000 including the power transmission device 100N having the power transmission circuit 120N illustrated in FIG. 24 also achieves the same effects as those of the first embodiment.

In the power transmission circuit 1200 illustrated in FIG. 25, an end portion of the planar coil Lp22, which is the nearest coil, is connected to the grid power source PS at a connection point between the grid power source PS and the primary side coil Ls1. When this connection configuration is schematically illustrated, a circuit configuration similar to that of FIG. 7 described above is provided. Thus, the wireless power transfer system 1000 including the power transmission device 100O having the power transmission circuit 1200 illustrated in FIG. 25 also achieves the same effects as those of the second embodiment.

(C3) In the above-described configuration in which the primary side coil Ls1 and the tertiary side coil Ls2 are disposed so as to overlap each other in the stacking direction, the tertiary side coil Ls2 is disposed above the primary side coil Ls1 in the stacking direction. However, the present disclosure is not limited to this configuration. The tertiary side coil Ls2 may be disposed below the primary side coil Ls1 in the stacking direction. Such a configuration can also achieve effects similar to those of the first embodiment by connecting an end portion of the nearest coil to the grid power source PS at a connection point between the first variable impedance element 20 and the grid power source PS. Such a configuration can also achieve effects similar to those of the second embodiment by connecting an end portion of the nearest coil to the grid power source PS at a connection point between the primary side coil Ls1 and the grid power source PS.

(C4) In the above-described configuration in which the primary side coil Ls1 and the tertiary side coil Ls2 are disposed in the same layer, the tertiary side coil Ls2 is disposed in a space radially inward of the primary side coil Ls1. However, the present disclosure is not limited to this configuration. The primary side coil Ls1 may be disposed in a space radially inward of the tertiary side coil Ls2. Such a configuration can also achieve effects similar to those of the first embodiment by connecting an end portion of the nearest coil to the grid power source PS at a connection point between the first variable impedance element 20 and the grid power source PS. Such a configuration can also achieve effects similar to those of the second embodiment by connecting an end portion of the nearest coil to the grid power source PS at a connection point between the primary side coil Ls1 and the grid power source PS.

(C5) In the above embodiments, the primary side coil Ls1 and the tertiary side coil Ls2 are formed of conductive patterns provided on a printed circuit board. However, the present disclosure is not limited to this configuration. The primary side coil Ls1 and the tertiary side coil Ls2 may be formed of litz wire. In such a configuration, an air layer present between winding layers formed by the litz wire corresponds to a "spacing layer" in the present disclosure. The winding layers may be separated by resin or the like. In such a configuration, a resin layer present between the winding layers corresponds to the spacing layer.

The present disclosure is not limited to any of the embodiments described above but may be implemented by a variety of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

### (ASPECT 1)

A power transmission circuit (120 to 1200) for wirelessly transferring power to a power reception device (200), the power transmission circuit comprising:
a first resonance circuit (10) including:
   a first coil (Ls1) connected to a power supply device (110) configured to supply AC power having a predefined operating frequency; and
   a first variable impedance element (20) connected in series with the first coil between the first coil and the power supply device, the first variable impedance element being configured to switch a state of the first resonance circuit between a resonance state and a non-resonance state; and
a second resonance circuit (12) including:
   a second coil (Ls2) provided to be magnetically coupled to the first coil; and
   a second variable impedance element (22) connected in parallel with the second coil, the second variable impedance element being configured to switch a state of the second resonance circuit between a resonance state and a non-resonance state, wherein one of both end portions of the second coil is connected to the power supply device.

### (ASPECT 2)

The power transmission circuit according to aspect 1, wherein
each of the first coil and the second coil is formed such that a plurality of planar coils (Lp11, Lp12, Lp21, Lp22) overlap one another in a stacking direction,
one of the first coil and the second coil is disposed away from the other coil in the stacking direction, and
among the plurality of planar coils forming the second coil, an end portion of a nearest coil, which is the planar coil having a smallest distance to the first coil along the stacking direction, is connected to the power supply device at a connection point between the power supply device and the first variable impedance element.

### (ASPECT 3)

The power transmission circuit according to aspect 1, wherein
each of the first coil and the second coil is formed such that a plurality of planar coils overlap one another in a stacking direction,
one of the first coil and the second coil is disposed away from the other coil in the stacking direction, and
among the plurality of planar coils forming the second coil, an end portion of a nearest coil, which is the planar coil having a smallest distance to the first coil along the stacking direction, is connected to the power supply device at a connection point between the power supply device and the first coil.

### (ASPECT 4)

The power transmission circuit according to aspect 2 or 3, wherein
a distance (d3) along the stacking direction between the nearest coil and the first coil is greater than a smaller one of a distance (d1) along the stacking direction between the plurality of planar coils forming the first coil and a distance (d2) along the stacking direction between the plurality of planar coils forming the second coil.

### (ASPECT 5)

The power transmission circuit according to aspect 1, wherein
each of the first coil and the second coil is formed of a plurality of planar coils wound in the same layer,
one of the first coil and the second coil is disposed, in the same layer, in an empty region radially inward of the other coil, and
an end portion of a nearest coil among the plurality of planar coils forming the second coil is connected to the power supply device at a connection point between the power supply device and the first variable impedance element, the nearest coil being a planar coil that has a smallest distance in a radial direction between a conductor forming the planar coil and a conductor forming the first coil.

### (ASPECT 6)

The power transmission circuit according to aspect 1, wherein
each of the first coil and the second coil is formed of a plurality of planar coils wound in the same layer,
one of the first coil and the second coil is disposed, in the same layer, in an empty region radially inward of the other coil, and
an end portion of a nearest coil among the plurality of planar coils forming the second coil is connected to the power supply device at a connection point between the power supply device and the first coil, the nearest coil being a planar coil that has a smallest distance in a radial direction between a conductor forming the planar coil and a conductor forming the first coil.

### (ASPECT 7)

The power transmission circuit according to aspect 5 or 6, wherein
a distance (d6) in the radial direction between a conductor forming the nearest coil and a conductor forming the first coil is greater than a smaller one of two distances, the two distances including a distance (d4) in the radial direction between conductors forming the first coil and a distance (d5) in the radial direction between conductors forming the second coil.

### (ASPECT 8)

The power transmission circuit according to any one of aspects 1 to 7, wherein
each of the first variable impedance element and the second variable impedance element comprises:
a first capacitor (C11, C21); and
a series circuit connected in parallel with the first capacitor, the series circuit including a second capacitor (C12, C22) and a switching element (SW1, SW2) that are connected in series with each other,
the first variable impedance element is configured to switch a state of the first resonance circuit between a resonance state and a non-resonance state according to a positional relationship with the power reception device, and
the second variable impedance element is configured to switch a state of the second resonance circuit between a resonance state and a non-resonance state according to the positional relationship with the power reception device.

### (ASPECT 9)

The power transmission circuit according to any one of aspects 1 to 7, wherein
the first coil and the second coil are separated by a spacing layer.

### (ASPECT 10)

The power transmission circuit according to any one of aspects 1 to 3, 5, and 6, wherein
the first coil and the second coil are formed of litz wire.

### (ASPECT 11)

The power transmission circuit according to any one of aspects 1 to 7, wherein
the first coil and the second coil are formed of conductive patterns provided on a printed circuit board.

### (ASPECT 12)

A power transmission device (100 to 100O) configured to wirelessly transfer power to a power reception device, the power transmission device comprising:
the power transmission circuit according to aspect 1; and
a power supply device configured to supply AC power having a predefined operating frequency to the power transmission circuit.

### (ASPECT 13)

A power reception device configured to be wirelessly supplied with power from the power transmission device according to aspect 12.

### (ASPECT 14)

A wireless power transfer system (1000) comprising:
the power transmission device according to aspect 12; and
the power reception device according to aspect 13.

## Claims

1. A power transmission circuit (120 to 1200) for wirelessly transferring power to a power reception device (200), the power transmission circuit comprising:
a first resonance circuit (10) including:
a first coil (Ls1) connected to a power supply device (110) configured to supply AC power having a predefined operating frequency; and
a first variable impedance element (20) connected in series with the first coil between the first coil and the power supply device, the first variable impedance element being configured to switch a state of the first resonance circuit between a resonance state and a non-resonance state; and
a second resonance circuit (12) including:
a second coil (Ls2) provided to be magnetically coupled to the first coil; and
a second variable impedance element (22) connected in parallel with the second coil, the second variable impedance element being configured to switch a state of the second resonance circuit between a resonance state and a non-resonance state, wherein
one of both end portions of the second coil is connected to the power supply device.

2. The power transmission circuit according to claim 1, wherein
each of the first coil and the second coil is formed such that a plurality of planar coils (Lp11, Lp12, Lp21, Lp22) overlap one another in a stacking direction,
one of the first coil and the second coil is disposed away from the other coil in the stacking direction, and
among the plurality of planar coils forming the second coil, an end portion of a nearest coil, which is the planar coil having a smallest distance to the first coil along the stacking direction, is connected to the power supply device at a connection point between the power supply device and the first variable impedance element.

3. The power transmission circuit according to claim 1, wherein
each of the first coil and the second coil is formed such that a plurality of planar coils overlap one another in a stacking direction,
one of the first coil and the second coil is disposed away from the other coil in the stacking direction, and
among the plurality of planar coils forming the second coil, an end portion of a nearest coil, which is the planar coil having a smallest distance to the first coil along the stacking direction, is connected to the power supply device at a connection point between the power supply device and the first coil.

4. The power transmission circuit according to claim 2 or 3, wherein
a distance (d3) along the stacking direction between the nearest coil and the first coil is greater than a smaller one of a distance (d1) along the stacking direction between the plurality of planar coils forming the first coil and a distance (d2) along the stacking direction between the plurality of planar coils forming the second coil.

5. The power transmission circuit according to claim 1, wherein
each of the first coil and the second coil is formed of a plurality of planar coils wound in the same layer,
one of the first coil and the second coil is disposed, in the same layer, in an empty region radially inward of the other coil, and
an end portion of a nearest coil among the plurality of planar coils forming the second coil is connected to the power supply device at a connection point between the power supply device and the first variable impedance element, the nearest coil being a planar coil that has a smallest distance in a radial direction between a conductor forming the planar coil and a conductor forming the first coil.

6. The power transmission circuit according to claim 1, wherein
each of the first coil and the second coil is formed of a plurality of planar coils wound in the same layer,
one of the first coil and the second coil is disposed, in the same layer, in an empty region radially inward of the other coil, and
an end portion of a nearest coil among the plurality of planar coils forming the second coil is connected to the power supply device at a connection point between the power supply device and the first coil, the nearest coil being a planar coil that has a smallest distance in a radial direction between a conductor forming the planar coil and a conductor forming the first coil.

7. The power transmission circuit according to claim 5 or 6, wherein
a distance (d6) in the radial direction between a conductor forming the nearest coil and a conductor forming the first coil is greater than a smaller one of two distances, the two distances including a distance (d4) in the radial direction between conductors forming the first coil and a distance (d5) in the radial direction between conductors forming the second coil.

8. The power transmission circuit according to any one of claims 1 to 3, 5, and 6, wherein
each of the first variable impedance element and the second variable impedance element comprises:
a first capacitor (C11, C21); and
a series circuit connected in parallel with the first capacitor, the series circuit including a second capacitor (C12, C22) and a switching element (SW1, SW2) that are connected in series with each other,
the first variable impedance element is configured to switch a state of the first resonance circuit between a resonance state and a non-resonance state according to a positional relationship with the power reception device, and
the second variable impedance element is configured to switch a state of the second resonance circuit between a resonance state and a non-resonance state according to the positional relationship with the power reception device.

9. The power transmission circuit according to any one of claims 1 to 3, 5, and 6, wherein
the first coil and the second coil are separated by a spacing layer.

10. The power transmission circuit according to any one of claims 1 to 3, 5, and 6, wherein the first coil and the second coil are formed of litz wire.

11. The power transmission circuit according to any one of claims 1 to 3, 5, and 6, wherein
the first coil and the second coil are formed of conductive patterns provided on a printed circuit board.

12. A power transmission device (100 to 100O) configured to wirelessly transfer power to a power reception device, the power transmission device comprising:
the power transmission circuit according to claim 1; and
a power supply device configured to supply AC power having a predefined operating frequency to the power transmission circuit.

13. A power reception device configured to be wirelessly supplied with power from the power transmission device according to claim 12.

14. A wireless power transfer system (1000) comprising:
the power transmission device according to claim 12; and
the power reception device according to claim 13.
